# EUROPÄISCHE PATENTSCHRIFT

(11) **EP 0 669 273 B1**
(45) Veröffentlichungstag und Bekanntmachung des Hinweises auf die Patenterteilung: **15.04.1998**
(21) Anmeldenummer: 94120328.3
(22) Anmeldetag: 21.12.1994
(51) Int. Cl.: B65G 53/46

(54) **Zellenradschleuse**
Cellular rotary valve
Vanne à roue cellulaire

(30) Priorität: 23.02.1994 DE 4405828
(43) Veröffentlichungstag der Anmeldung: 30.08.1995
(73) Patentinhaber: KRUPP POLYSIUS AG, 59269 Beckum (DE)
(72) Erfinder: Kluger, Wolfgang, Dipl.-Ing., D-59269 Beckum (DE); Schwab, Klaus, Dipl.-Ing., D-59514 Dinker (DE); Franz, Andreas, Dr.-Ing., D-33378 Rheda-Wiedenbrück (DE); Quittek, Dieter, D-59227 Ahlen (DE); Köllner, Bernd, D-59269 Beckum (DE)
(74) Vertreter: Tetzner, Volkmar, Dr.-Ing. Dr. jur.

(56) Entgegenhaltungen:
- EP-A- 0 462 500
- EP-A- 0 462 501

## Beschreibung

Die Erfindung betrifft eine Zellenradschleuse für rieselfähiges Schüttgut, entsprechend dem Oberbegriff des Anspruches 1.

Zellenradschleusen dieser Art dienen vor allem zur Dosierung von rieselfähigen Schüttgütern und/oder zum Einführen (Einschleusen) solcher Schüttgüter in pneumatische Förderleitungen, wenn die Räume oberhalb der Einlauföffnung und unterhalb der Auslauföffnung unterschiedlichen Drücken ausgesetzt sind.

Aus der Praxis sind nun verschiedene Ausführungsarten von Zellenradschleusen allgemein bekannt, bei denen in einem - bis auf Einlauföffnung und Auslauföffnung - weitgehend geschlossenen Gehäuse ein drehend antreibbares Zellenrad aufgenommen ist, das an seinen Stirnseiten offen oder geschlossen sein kann. Bei stirnseitig offenen Zellenrädern bzw. darin ausgebildeten Zellentaschen kommt das Schüttgut während der Drehbewegung des Zellenrades und somit auf dem Wege von der Einlauföffnung zur Auslauföffnung mit den Innenseiten der stirnseitigen Gehäusedeckel in Berührung, wodurch bei schleißendem Schüttgut ein erheblicher Abriebverschleiß entsteht. Letzterer erweist sich bereits nach relativ kurzer Zeit als besonders nachteilig bei Zellenradschleusen, die verhältnismäßig hoher Druckdifferenzen ausgesetzt sind und/oder bei denen eine relativ hohe Druckstoßfestigkeit bzw. Flammendurchschlagssicherheit (aufgrund von zur Explosion neigenden Schüttgütern, z. B. Kohlenstaub) gewährleistet sein muß.

Aus der DE-B-24 19 841 ist eine Zellenradschleuse der im Oberbegriff des Anspruches 1 vorausgesetzten Art bekannt, bei der das Zellenrad an seinen beiden Stirn-enden und somit auch die darin ausgebildeten Zellentaschen durch Stirnseiten bzw. Stirnscheiben begrenzt sind. Hierbei ist an jedem Stirnende zwischen der Stirnseite und dem benachbarten Gehäusedeckel ein Zwischenraum ausgebildet, in den über eine Zweigleitung kontinuierlich unter Druck stehende Reinluft als Spülluft eingeleitet wird, die zum einen durch die Spalte zwischen Zellenradumfang und Gehäuse in Richtung des Einlaufes und zum andern durch den Zwischenraum und einen kanalartig und schräg nach innen verlaufend in den unteren Gehäusebereich eingearbeiteten Austrittsspalt in den Schleusenauslauf strömen soll. Auf diese Weise soll möglichst weitgehend verhindert werden, daß Leckagen auftreten und Fördergut in die genannten Zwischenräume gelangt; um aber eventuell in diese Zwischenräume eingedrungenen Staub in den Schleusenauslauf abführen zu können, ist dafür gesorgt, daß diese Zwischenräume kontinuierlich mit der gesondert zugeführten Reinluft gespült werden, wodurch sie eine Art Bypasskammern bilden.

Bei der zuvor geschilderten bekannten Ausführung sind somit für die Zuführung von Spülluft in die beiden Zwischenräume besondere Leitungsverbindungen samt Verbindungseinrichtungen und Drucküberwachungs- und Einstellarmaturen mit entsprechendem Aufwand erforderlich. Darüber hinaus hat jedoch die Praxis auch gezeigt, daß es sich bei manchen Schüttgütern nicht immer ganz vermeiden läßt, daß sich an den Innenseiten der Zwischenräume Staubanteile festsetzen, die sich allmählich zu so dicken Schichten aufbauen können, daß sich aufgrund der sich gegenüber den ortsfesten Gehäusedeckeln drehenden Zellenrad-Stirnseiten nicht nur ein unerwünschter Abrieb einstellt, sondern das erforderliche Drehantriebsmoment für das Zellenrad derart zunimmt, daß das Zellenrad im Gehäuse nach einer gewissen Zeit blockiert.

Der Erfindung liegt daher die Aufgabe zugrunde, unter Vermeidung der geschilderten Nachteile der bekannten Ausführungen eine Zellenradschleuse der im Oberbegriff des Anspruches 1 vorausgesetzten Art zu schaffen, die sich bei relativ einfacher Konstruktion durch eine weitgehende Vermeidung von Abriebverschleiß an den Gehäusedeckeln sowie durch eine äußerst sichere Betriebsweise auszeichnet. Bei einer Verwendung für eine Dosierung und/oder Einschleusung von zur Explosion neigenden Schüttgütern (z.B. Kohlenstaub) soll diese Schleuse ferner möglichst druckstoßfest und flammendurchschlagssicher ausgeführt sein.

Diese Aufgabe wird erfindungsgemäß durch die im Kennzeichen des Anspruches 1 angeführten Merkmale gelöst.

Vorteilhafte Ausgestaltungen und Weiterbildungen der Erfindung sind Gegenstand der Unteransprüche.

Nach einem ersten Erfindungsmerkmal ist zwischen jeder Begrenzungsscheibe an den beiden Stirnenden des Zellenrades und dem jeweils benachbarten Gehäusedeckel eine gegenüber dem Gehäuse abgedichtete Schleißscheibe angeordnet, wobei zwischen jeder Schleißscheibe und der zugehörigen Begrenzungsscheibe wenigstens eine der Bypasskammern ausgebildet ist.

Diese gegenüber dem Gehäuse abgedichteten Schleißscheiben stellen gewissermaßen jeweils eine äußere Begrenzungswand für die dort vorhandenen Bypasskammern dar, und sie sind zweckmäßig mit relativ geringem Achsabstand von den benachbarten stirnseitigen Gehäusedeckeln angeordnet. Bei diesen Schleißscheiben kann es sich um relativ einfach herzustellende, zu montierende und ggf. auszuwechselnde Scheiben aus geeignetem Material handeln. Diese Schleißscheiben sorgen ferner dafür, daß zum einen die relativ aufwendigen Gehäusedeckel mit allen ihren Zubehörteilen praktisch vollkommen vor Verschleißeingriff seitens des Schüttgutes geschützt sind und daß zum andern eine relativ hohe Druckstoßfestigkeit bzw. Flammendurchschlagssicherheit für die Dosierung und/oder Förderung von rieselfähigen, zur Explosion neigenden Schüttgütern, wie z.B. Kohlenstaub, gewährleistet werden kann.

Während bei dieser Zellenradschleuse die axiale lichte Weite der oberen Einlauföffnung höchstens so groß ist wie die axiale lichte Zellentaschenbreite, entspricht - gemäß einem weiteren Erfindungsmerkmal - die axiale lichte Weite der Auslauföffnung etwa der axialen Gesamtlänge des Zellenrades einschließlich der axialen Abmessungen aller Bypasskammern.

Aufgrund dieser erfindungsgemäßen Ausführung können zwischen dem Umfang des Zellenrades und den Innenwandungen des Gehäuses auftretende Leckagen äußerst vorteilhaft abgebaut werden, wobei durch die Dichtspalte zwischen Zellenrad-Außenumfang und Gehäuse-Innenwandungen in die Bypasskammern eindringendes Schüttgut direkt nach unten abgeführt und durch die dort uneingeengt vorhandene Auslauföffnung mit dem übrigen Schüttgut ausgetragen werden. Die zuvor genannten Dichtspalte wirken dabei gewissermaßen als Leckage-Drosseln. Auf die Einführung von unter Druck stehendem Spülgas in die Bypasskammern kann aufgrund der zuverlässigen Abführung von hindurchgetretenem Schüttgut nach unten verzichtet werden.

Gemäß einem weiteren Erfindungsmerkmal trägt das Zellenrad auf der axial äußeren Seite jeder Begrenzungsscheibe eine Anzahl von Außenflügeln, die gemeinsam mit dem Zellenrad umlaufen und sich einerseits in axialer Richtung von der zugehörigen Begrenzungsscheibe bis zur benachbarten Schleißscheibe sowie andererseits von der Antriebswelle bis zum Außenumfang des Zellenrades erstrecken. Hierdurch werden somit auf den axial äußeren Seiten jeder Begrenzungsscheibe und somit auch in jeder dort ausgebildeten Bypasskammer mit dem Zellenrad rotierende Taschen vorgesehen, die gewissermaßen für einen allmählichen Druckabbau von Leckagen im Bereich dieser Bypasskammern sorgen und gleichzeitig auch das eventuell in diese Bypasskammern eingedrungene Schüttgut ständig nach unten zur Auslauföffnung führen.

Gerade bei der zuletzt genannten Ausbildung ist es ferner vorteilhaft, wenn die innere Stirnseite jeder Schleißscheibe unter Federvorspannung mit den ihr zugewandten Stirnenden der Außenflügel in Gleitberührung steht. Wenn somit eventuell zum Anbacken an Wänden neigendes Schüttgut durch die erfindungsgemäße Zellenradschleuse gefördert wird, dann können aufgrund der Gleitberührung zwischen den Stirnenden der Außenflügel und der zugehörigen Schleißscheibe an den letzteren eventuell frisch angebackte Schüttgutteile sofort wieder abgekratzt werden.

Eine vorteilhafte Ausführungsvariante der Erfindung wird dadurch erreicht, daß zwischen jeder Begrenzungsscheibe und der benachbarten Schleißscheibe wenigstens eine Zwischenscheibe auf dem zugehörigen Antriebswellenende derart angeordnet ist, daß der Zwischenraum zwischen Begrenzungsscheibe und Schleißscheibe in wenigstens zwei Bypasskammern unterteilt ist, wobei in jeder Bypasskammer Außenflügel angeordnet sind.

Bei dieser Anordnung und Ausbildung der Zellenradschleuse mit wenigstens zwei Bypasskammern an jedem Zellenrad-Stirnende wird eine Art äußerst zuverlässige Labyrinthdichtung geschaffen.

Die Erfindung sei nachfolgend anhand der Zeichnung näher erläutert. In dieser Zeichnung zeigen
- Fig.1: eine vertikale Teil-Längsschnittansicht durch die erfindungsgemäße Zellenradschleuse;
- Fig.2: eine Stirnansicht (Pfeil II in Fig.1) der Zellenradschleuse, bei teilweiser Schnittdarstellung im Bereich der Zellentaschen;
- Fig.3: eine Querschnittsansicht, entlang der Linie III-III in Fig.1, durch eine Bypasskammer;
- Fig.4: eine ähnliche Teil-Längsschnittansicht wie Fig.1, jedoch zur Erläuterung einer Ausführungsvariante mit zwei Bypasskammern im Bereich jedes Zellenrad-Stirnendes.

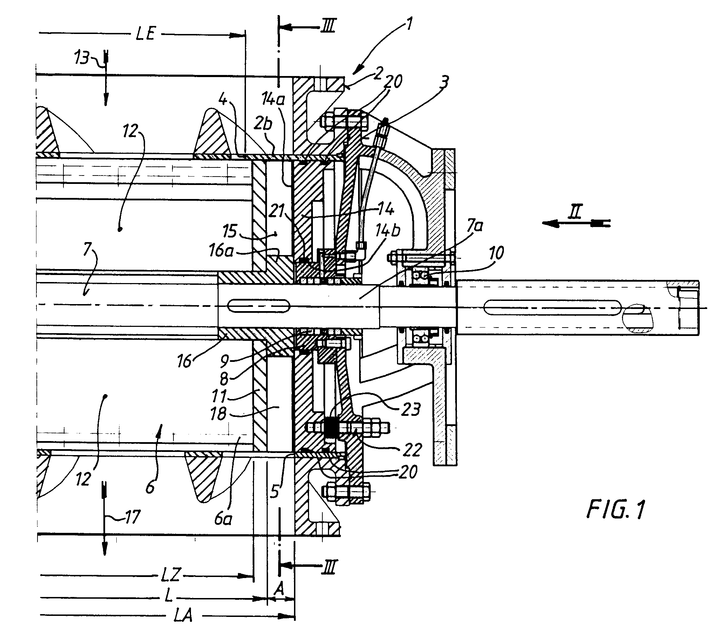

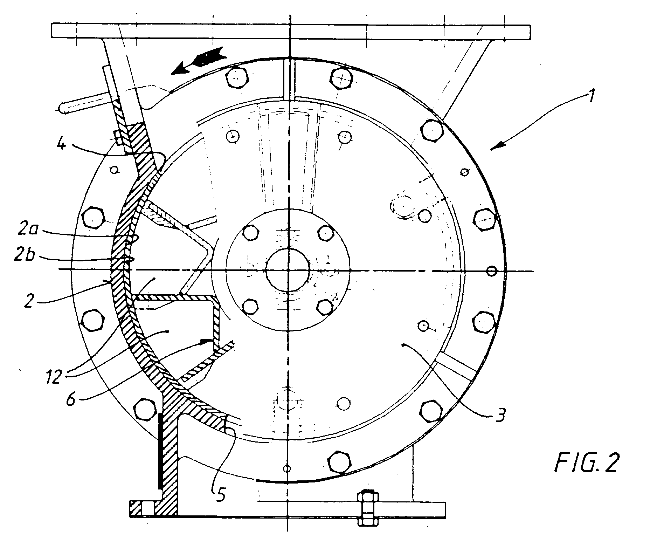

Ein erstes Ausführungsbeispiel der erfindungsgemäßen Zellenradschleuse 1 sei anhand der Fig.1 bis 3 erläutert, wobei Fig.1 lediglich eine Teil-Längsschnittansicht (Vertikalschnitt) im Bereich des einen Stirnendes (hier des rechten Stirnendes) darstellt, während das andere (hier linke) Stirnende der Zellenradschleuse 1 grundsätzlich gleichartig, jedoch spiegelbildlich ausgeführt ist. Es sei angenommen, daß diese Zellenradschleuse 1 insbesondere zur Dosierung und/oder Förderung von rieselfähigen, zur Explosion neigenden Schüttgütern, wie z. B. Kohlenstaub oder dgl., bestimmt ist.

Diese Zellenradschleuse 1 enthält ein Gehäuse 2 mit einer zylindrischen bzw. teilzylindrischen Innenwandung 2a, die in der aus der Zeichnung ersichtlichen Weise noch mit einem zylindrischen Innenmantel 2b ausgekleidet sein kann. Das Gehäuse 2 weist ferner zwei stirnseitige Gehäusedeckel sowie eine obere Einlauföffnung 4 und eine untere Auslauföffnung 5 für das zu dosierende bzw. zu fördernde Schüttgut auf.

In dem Gehäuse 2 ist ein Zellenrad 6 in üblicher Weise drehantreibbar angeordnet. Dieses Zellenrad 6 ist drehfest mit einer Antriebswelle 7 versehen, deren Enden, z. B. 7a, durch Deckelnaben 8 nach außen hindurchgeführt und in den entsprechenden Gehäusedeckeln 3 drehbar gelagert sind. Hierbei sind in den ortsfesten Deckelnaben 8 nachstellbare Stopfbuchsendichtungen 9 zum abgedichteten Hindurchführen der entsprechenden Antriebswellenenden 7a und jeweils axial dazu nach außen versetzt - ebenfalls in den Gehäusedeckeln 3 - geeignete Lager 10 (z. B. Wälzlager) für diese Antriebswellenenden 7a vorgesehen.

Das Zellenrad 6 weist im Bereich seiner beiden Stirnenden (in Fig.1 ist lediglich das eine, rechte Stirnende 6a veranschaulicht) je eine Begrenzungsscheibe 11 auf, die als im wesentlichen flache Kreisscheibe mit zentraler Bohrung (zum Hindurchführen der Antriebswelle 7) ausgeführt sein kann und zur Begrenzung von Zellentaschen 12 vorgesehen sind, die zum Zellenrad-Außenumfang hin offen sind und zur Aufnahme und Weiterförderung entsprechender Schüttgutanteile dienen.

Damit das von oben her - entsprechend Pfeil 13 - der Zellenradschleuse 1 und dem Zellenrad 6 zugeführte Schüttgut zuverlässig in die einzelnen Zellentaschen 12 eingeführt werden kann und dabei nicht direkt in den Bereich axial außerhalb der Begrenzungsscheiben 11 gelangt, ist die axiale lichte Weite LE der oberen Einlauföffnung 4 höchstens so groß wie die axiale lichte Zellentaschenbreite LZ; im Ausführungsbeispiel gemäß Fig.1 ist die lichte Weite LE der Einlauföffnung vorzugsweise etwas kleiner als die axiale lichte Zellentaschenbreite LZ.

Von besonderer Bedeutung ist nun, daß zwischen jeder Begrenzungsscheibe 11 an den beiden Stirnenden des Zellenrades 6 und dem jeweils benachbarten Gehäusedeckel 3 eine gegenüber dem Gehäuse 2 abgedichtete Schleißscheibe 14 angeordnet und daß dabei zwischen jeder Schleißscheibe 14 und der zugehörigen Begrenzungsscheibe 11 wenigstens eine Bypasskammer 15 ausgebildet ist (im Beispiel der Fig.1 ist im Bereich jedes Stirnendes nur eine solche Bypasskammer vorhanden). Jede dieser Bypasskammern 15 wird somit in axialer Richtung von der Begrenzungsscheibe 11 und der benachbarten Schleißscheibe 14 und in radialer Richtung durch die Gehäuseinnenwandung 2a bzw. deren Innenmantel 2b einerseits und von der Antriebswelle 7 bzw. - wie in Fig.1 - einer darauf vorgesehenen Bundmuffe 16 begrenzt, deren Bund 16a gleichzeitig eine Art Distanzelement zwischen Begrenzungsscheibe 11 und Schleißscheibe 14 (entsprechend der jeweiligen axialen Breite der Bypasskammer 15) bildet.

Bei der zuvor geschilderten Ausbildung entspricht ferner die axiale lichte Weite LA der Auslauföffnung 5 etwa der axialen Gesamtlänge L des Zellenrades 6 plus (einschließlich) aller axialen Abmessungen A der Bypasskammern 15. Auf diese Weise kann nicht nur das in den Zellentaschen 12 geförderte Schüttgut - gemäß Pfeil 17 - frei nach unten aus der Auslauföffnung 5 austreten, sondern auch eventuell durch die Dichtspalte zwischen den Begrenzungsscheiben 11 und den damit zusammenwirkenden Abschnitten der Gehäusewandung 2a bzw. des Innenmantels 2b hindurchgetretenes Schüttgut.

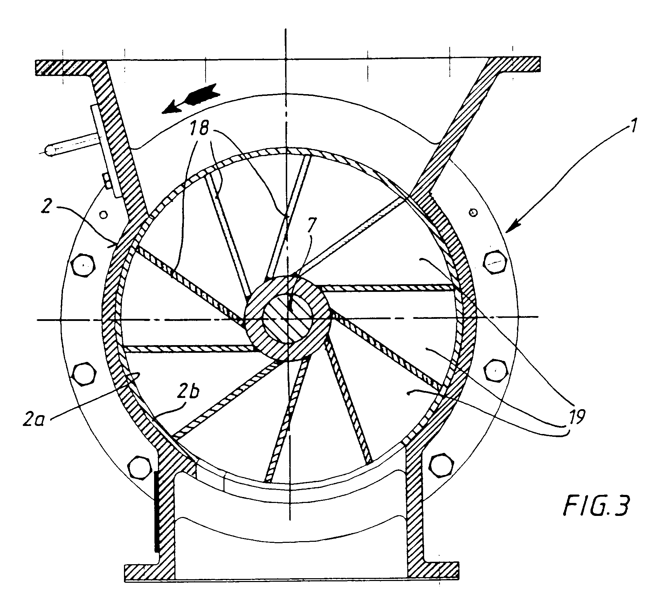

Das Zellenrad 6 trägt ferner auf der axial äußeren Seite jeder Begrenzungsscheibe 11 eine entsprechende Anzahl von Außenflügeln 18, die gemeinsam mit dem Zellenrad 6 umlaufen (also drehfest damit verbunden sind) und etwa entsprechend der Darstellung in Fig.3 angeordnet und verteilt sein können. Diese Außenflügel 18 erstrecken sich dabei einerseits in axialer Richtung von der zugehörigen Begrenzungsscheibe 11 bis zur benachbarten Schleißscheibe 14 sowie andererseits von der Antriebswelle 7 bzw. der darauf befestigten Bundmuffe 16 bis zum Außenumfang des Zellenrades 6. Es ergibt sich auf diese Weise ebenfalls eine entsprechende Anzahl von Zellentaschen (zweiten Zellentaschen) 19, die einen allmählichen Druckabbau zwischen Einlauföffnung 4 und Auslauföffnung 5 sowie ein zuverlässiges Auffangen und Anführen von in die Bypasskammern 15 gelangtem Schüttgut gewährleisten.

Die zuvor erläuterten Außenflügel 18 sind in axialer Richtung so weit nach außen geführt, daß ihre freien Stirnenden mit der ihnen zugewandten inneren Stirnseite 14a der zugehörigen Schleißscheibe 14 in Gleitberührung stehen, und zwar - wie später noch erläutert wird - unter geeigneter Federvorspannung.

Für die Anordnung der Schleißscheiben 14 ist es ferner zweckmäßig, wenn jede von ihnen einerseits über erste statische Dichtungselemente (z. B. O-Ringe) 20 mit ihrem Außenumfangsrand an der zylindrischen Innenwandung 2a bzw. deren Innenmantel 2b des Gehäuses 2 und andererseits über eine zentrale Bohrung 14b und wenigstens ein darin angeordnetes zweites statisches Dichtungselement 21 auf der Außenseite (Außenumfangsseite) der zugehörigen Deckelnabe 8 jeweils dicht anliegt. Dabei ist jedoch jede Schleißscheibe 14 mittels mehrerer Stellschraubenanordnungen 22 am benachbarten Gehäusedeckel 3 derart gehaltert, daß sie in axialer Richtung gegenüber Gehäusedeckel 3 und Zellenrad 6 relativ eingestellt werden kann. Wie hierzu in Fig.1 ferner schematisch veranschaulicht ist, kann jede Stellschraubenanordnung 22 im Bereich zwischen dem Gehäusedeckel 3 und der Schleißscheibe 14 eine Druckfeder bzw. ein Druckfederpaket 23 tragen, durch das die Schleißscheibe 14 gegen die ihr zugewandten Stirnenden der Außenflügel 18 in geeigneter Weise federnd vorgespannt werden kann.

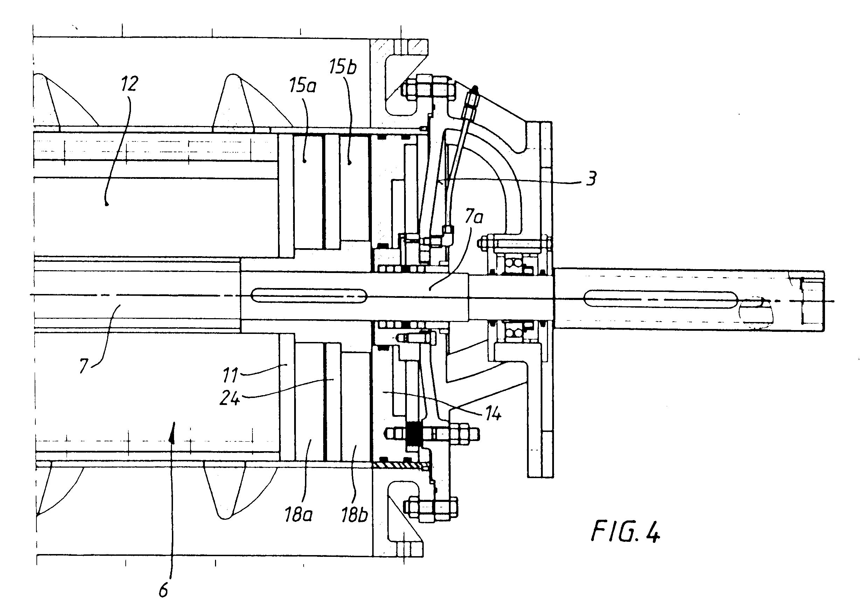

Anhand der der Fig.1 ähnlichen Fig.4 sei ferner noch ein weiteres Ausführungsbeispiel bzw. eine Ausführungsvariante zum ersten Beispiel erläutert, so daß gleiche Bauteile der Einfachheit halber mit denselben Bezugszeichen versehen sind wie in den Fig.1 bis 3 und somit eine nochmalige Erläuterung dieser Bauteile überflüssig ist.

Gemäß Fig.4 ist zwischen jeder Begrenzungsscheibe 11 des Zellenrades 6 und der benachbarten Schleißscheibe 14 noch eine Zwischenscheibe 24 auf dem zugehörigen Antriebswellenende 7a drehfest angebracht, und zwar in der Weise, daß der Zwischenraum zwischen Begrenzungsscheibe 11 und Schleißscheibe 14 - im Gegensatz zur Darstellung in Fig.1 - in zwei Bypasskammern 15a und 15b unterteilt ist. Hierbei ist es zweckmäßig, wenn in jeder Bypasskammer 15a und 15b wiederum Außenflügel 18a bzw. 18b in gleicher Weise wie die Außenflügel 18 gemäß den Fig.1 und 3 angeordnet und dabei entsprechend drehfest einerseits mit der Schleißscheibe 11 und andererseits mit der Zwischenscheibe 24 (jeweils auf deren dem Gehäusedeckel 3 zugewandten äußeren Stirnseite) sowie außerdem mit dem zugehörigen Antriebswellenende 7a verbunden sind.

Grundsätzlich sorgen die axial außerhalb der der eigentlichen Materialförderung dienenden Zellentaschen 12 vorgesehenen Bypasskammern 15, 15a, 15b sowie die darin mit dem Zellenrad 6 umlaufenden Außenflügel 18, 18a, 18b in vorteilhafter Weise für einen allmählichen Druckabbau zwischen Einlauföffnung 4 und Auslauföffnung 5 dieser Zellenradschleuse 1 sowie außerdem für einen zuverlässigen Austrag von in die Bypasskammern gelangten Schüttgutanteilen nach unten durch die Auslauföffnung 5. Darüber hinaus wird durch diese Bypasskammern 15, 15a, 15b sowie durch die sie axial nach außen begrenzenden Schleißscheiben 14 (mit deren statischen Dichtungselementen 20 und 21) auch für eine zuverlässige Abdichtung zu dem benachbarten und mit axialem Abstand von der letzteren angeordneten Gehäusedeckel 3 Sorge getragen. Bei der Entscheidung, ob auf der axial äußeren Seite jeder Begrenzungsscheibe 11, d. h. an jeder äußeren Stirnseite des Zellenrades 6 nur eine einzige Bypasskammer 15 (wie gemäß Fig.1) oder wenigstens zwei Bypasskammern 15a, 15b (wie gemäß Fig.4) ausgebildet werden, wird sich nach der Höhe des beim Betrieb dieser Zellenradschleuse 1 zu erwartenden Überdruckes richten, wobei vor allem bei einer Anordnung und Ausbildung von wenigstens zwei Bypasskammern an jedem Zellenrad-Stirnende eine Art äußerst zuverlässige Labyrinthdichtung geschaffen wird. Gerade wenn diese erfindungsgemäße Zellenradschleuse 1 für die Dosierung und/oder Förderung von zur Explosion neigendem Schüttgut, wie z. B. Kohlenstaub, vorgesehen ist, dann muß eine besonders hohe Druckstoßfestigkeit bzw. Flammendurchschlagssicherheit bei relativ hohen Überdrücken (z. B. bis 13, 5 bar) gewährleistet sein. Dies kann bei der erfindungsgemäßen Schleusenkonstruktion somit durch verhältnismäßig einfache Baumaßnahmen und mit relativ großer Sicherheit erreicht werden. Diese Sicherheit wird noch dadurch unterstützt, daß bei dieser erfindungsgemäßen Zellenradschleuse 1 keinerlei Reinluft oder Spülluft durch die Bypasskammern geleitet wird, was die Explosionsneigung entsprechender Schüttgüter besonders erhöhen könnte.

## Patentansprüche

1. Zellenradschleuse für rieselfähiges Schüttgut, enthaltend
a) ein Gehäuse (2) mit zwei stirnseitigen Gehäusedeckeln (3) sowie einer Einlauföffnung (4) und einer Auslauföffnung (5),
b) ein drehantreibbar im Gehäuse angeordnetes Zellenrad (6), das im Bereich seiner beiden Stirnenden (6a) Begrenzungsscheiben (11) für radial zum Zellenrad-Umfang hin offene Zellentaschen (12) aufweist und das mit einer Antriebswelle (7) versehen ist, deren Enden (7a) durch Deckelnaben (8) nach außen geführt und in den Gehäusedeckeln (3) drehbar gelagert sind, wobei
c) im Bereich zwischen den Begrenzungsscheiben (11) des Zellenrades und den beiden Gehäusedeckeln (3) Bypasskammern (15) ausgebildet sind und wobei
d) die axiale lichte Weite (LE) der Einlauföffnung (4) höchstens so groß ist wie die axiale lichte Zellentaschenbreite (LZ),
gekennzeichnet durch folgende Merkmale:
e) zwischen jeder Begrenzungsscheibe (11) und dem benachbarten Gehäusedeckel (3) ist eine gegenüber dem Gehäuse (2) abgedichtete Schleißscheibe (14) angeordnet, wobei zwischen jeder Schleißscheibe (14) und der zugehörigen Begrenzungsscheibe (11) wenigstens eine der Bypasskammern (15) ausgebildet ist;
f) die axiale lichte Weite (LA) der Auslauföffnung (5) entspricht etwa der axialen Gesamtlänge (L) des Zellenrades (6) einschließlich der axialen Abmessungen (A) aller Bypasskammern (15);
g) das Zellenrad (6) trägt auf der axial äußeren Seite jeder Begrenzungsscheibe (11) eine Anzahl von Außenflügeln (18), die gemeinsam mit dem Zellenrad umlaufen und sich einerseits in axialer Richtung von der zugehörigen Begrenzungsscheibe bis zur benachbarten Schleißscheibe (14) sowie andererseits von der Antriebswelle (7) bis zum Außenumfang des Zellenrades erstrecken.

2. Zellenradschleuse nach Anspruch 1, dadurch gekennzeichnet, daß die innere Stirnseite (14a) jeder Schleißscheibe (14) unter Federvorspannung mit den ihr zugewandten Stirnenden der Außenflügel (18, 18b) in Gleitberührung steht.

3. Zellenradschleuse nach Anspruch 1, dadurch gekennzeichnet, daß jede Schleißscheibe (14) unter statischer Abdichtung einerseits mit ihrem Außenumfangsrand an einer zylindrischen Innenwandung (2a, 2b) des Gehäuses (2) und andererseits über eine zentrale Bohrung (11a) auf der Außenseite der zugehörigen Deckelnabe (8) anliegt, wobei jede Schleißscheibe mittels Stellschraubenanordnungen (22) am benachbarten Gehäusedeckel (3) drehfest gehaltert, jedoch in axialer Richtung gegenüber Gehäusedeckel und Zellenrad (6) relativ einstellbar ist.

4. Zellenradschleuse nach Anspruch 1, dadurch gekennzeichnet, daß in den ortsfesten Deckelnaben (8) nachstellbare Stopfbuchsendichtungen (9) zum abgedichteten Hindurchführen der Antriebswellenenden (7a) und jeweils axial dazu nach außen versetzt Lager (10) für diese Antriebswellenenden vorgesehen sind.

5. Zellenradschleuse nach Anspruch 1, dadurch gekennzeichnet, daß zwischen jeder Begrenzungsscheibe (11) und der benachbarten Schleißscheibe (14) wenigstens eine Zwischenscheibe (24) auf dem zugehörigen Antriebswellenende (7a) derart angeordnet ist, daß der Zwischenraum zwischen Begrenzungsscheibe und Schleißscheibe in wenigstens zwei Bypasskammern (15a, 15b) unterteilt ist, wobei in jeder Bypasskammer Außenflügel (18a, 18b) angeordnet sind.

## Claims

1. Rotary vane gate for free-flowing bulk material, comprising
a) a housing (2) with two housing covers (3) on the end faces as well as an inlet opening (4) and an outlet opening (5),
b) a compartmentalised wheel (6) which is disposed so that it can be driven in rotation in the housing and which has in the region of its two end faces (6a) limiting plates (11) for compartments (12) which are open radially towards the circumference of the wheel and is provided with a drive shaft (7), the ends (7a) of which are guided outwards through cover bosses (8) and are rotatably mounted in the housing covers (3), wherein
c) bypass chambers (15) are constructed in the region between the limiting plates (11) of the wheel and the two housing covers (3), and wherein
d) the axial internal width (LE) of the inlet opening (4) is at most as great as the axial internal width (LZ) of the compartment,
characterised by the following features:
e) a wear plate (14) which is sealed with respect to the housing (2) is disposed between each limiting plate (11) and the neighbouring housing cover (3), and between each wear plate (14) and the appertaining limiting plate (11) at least one of the bypass chambers (15) is constructed;
f) the axial internal width (LA) of the outlet opening (5) corresponds approximately to the axial overall length (L) of the wheel (6) including the axial dimensions (A) of all bypass chambers (15);
g) the wheel (6) bears on the axially outer face of each limiting plate (11) a plurality of outer vanes (18) which revolve jointly with the wheel and extend on the one hand in the axial direction from the appertaining limiting plate as far as the neighbouring wear plate (14) and on the other hand from the drive shaft (7) as far as the outer circumference of the wheel.

2. Rotary vane gate as claimed in Claim 1, characterised in that the inner end face (14a) of each wear plate (14) is in sliding contact under spring pretension with the end faces of the outer vanes (18, 18b) facing it.

3. Rotary vane gate as claimed in Claim 1, characterised in that each wear plate (14) rests with static sealing on the one hand with its outer peripheral edge on a cylindrical inner wall (2a, 2b) of the housing (2) and on the other hand by way of a central bore (11a) on the outer face of the appertaining cover boss (8), each wear plate being held non-rotatably by means of setscrew arrangements (22) on the neighbouring housing cover (3) but being adjustable in the axial direction relative to the housing cover and wheel (6).

4. Rotary vane gate as claimed in Claim 1, characterised in that there are provided in the stationary cover bosses (8) adjustable stuffing-box packings (9) for sealed passage of the drive shaft ends (7a) and in each case bearings (10) offset axially with respect thereto are provided for these drive shaft ends.

5. Rotary vane gate as claimed in Claim 1, characterised in that between each limiting plate (11) and the neighbouring wear plate (14) at least one intermediate disc (24) is mounted on the appertaining drive shaft end (7a) in such a way that the space between the limiting plate and the wear plate is divided into at least two bypass chambers (15a, 15b), outer vanes (18a, 18b) being disposed in each bypass chamber.

## Revendications

1. Sas à roue cellulaire pour matière en vrac capables de s'écouler, comprenant :
a) une enveloppe (2) comportant deux couvercles (3), dont l'un sur chacun des côtés extrêmes, ainsi qu'une orifice d'admission (4) et un orifice de sortie (5),
b) une roue cellulaire (6) pouvant être entraînée en rotation, disposée dans l'enveloppe, comportant à proximité des deux extrémités frontales (6a) des disques (11) de délimitation de poches cellulaires (12) ouvertes radialement vers la circonférence de la roue et munie d'un arbre d'entraînement (7) dont les extrémités (7a) se prolongent vers l'extérieur en passant par un moyeu (8) des couvercles et sont montées rotatives dans les couvercles (3) de l'enveloppe,
c) des chambres de dérivation (15) étant réalisées entre les disques de délimitation (11) de la roue cellulaire et les deux couvercles (3) de l'enveloppe et
d) la largeur axiale libre (LE) de l'orifice d'admission (4) étant au maximum aussi grande que la largeur axiale libre (LZ) des poches cellulaires,
caractérisé par les particularités suivantes :
e) un disque d'usure (14) rendu hermétique par rapport à l'enveloppe (2) est disposé entre chaque disque de délimitation (11) et le couvercle voisin (3) de l'enveloppe, au moins l'une des chambres de dérivation étant réalisée entre chaque disque d'usure (14) et le disque correspondant de délimitation (15),
f) la largeur axiale libre (LA) de l'orifice de sortie (5) correspond à peu près à la longueur axiale totale (L) de la roue cellulaire (6), y compris les cotes axiales (A) de toutes les chambres de dérivation (15) ;
g) la roue cellulaire (6) supporte sur le côté axialement extérieur de chaque disque de délimitation (11) plusieurs ailes extérieures (18) qui tournent avec la roue cellulaire et vont d'une part en direction axiale du disque correspondant de délimitation jusqu'au disque voisin d'usure (14) et d'autre part de l'arbre d'entraînement (7) jusqu'à la circonférence extérieure de la roue cellulaire.

2. Sas à roue cellulaire selon la revendication 1, caractérisé en ce que le côté extrême intérieur (14a) de chaque disque d'usure (14) est en contact de glissement sous précontrainte élastique avec l'extrémité frontale, tournée vers lui, des ailes extérieures (18, 18b).

3. Sas à roue cellulaire selon la revendication 1, caractérisé en ce que chaque disque d'usure (14) est en appui sous étanchéité statique d'une part par son bord circonférentiel extérieur contre une paroi cylindrique interne (2a, 2b) de l'enveloppe et d'autre part par un trou central (11a) contre le côté extérieur du moyeu (8) du couvercle correspondant, chaque disque d'usure étant monté de manière à être immobile en rotation au moyen d'ensembles (22) à vis de serrage sur le couvercle voisin (3) de l'enveloppe, mais de manière que sa position soit réglable en direction axiale par rapport à l'enveloppe du couvercle et à la roue cellulaire (6).

4. Sas à roue cellulaire selon la revendication 1, caractérisé en ce que des garnitures de presse-étoupe (9) qui sont réajustables sont prévues dans les moyeux fixes (8) des couvercles pour le passage étanche des extrémités (7a) de l'arbre d'entraînement et des paliers (10) qui sont décalés axialement vers l'extérieur par rapport à ses garnitures (9) sont prévus pour ces extrémités de l'arbre d'entraînement.

5. Sas à roue cellulaire selon la revendication 1, caractérisé en ce qu'au moins un disque intermédiaire (24) est disposé sur l'extrémité correspondante (7a) de l'arbre d'entraînement entre chaque disque de délimitation (11) et le disque voisin d'usure (14) de manière que l'espace intermédiaire compris entre disque de délimitation et disque d'usure soit subdivisé en au moins deux chambres de dérivation (15a, 15b), des ailes extérieures (18a, 18b) étant disposées dans chaque chambre de dérivation.
